Europäisches Patentamt

(19) European Patent Office

Office européen des brevets

(11) Publication number: **0 213 656**
**B1**

# (12) EUROPEAN PATENT SPECIFICATION

(45) Date of publication of the patent specification:
29.03.89

(51) Int. Cl.⁴: **E03C 1/04**

(21) Application number: **86201323.2**

(22) Date of filing: **25.07.86**

(54) Sanitary single-hole tap.

(30) Priority: **19.08.85 NL 8502284**

(43) Date of publication of application:
**11.03.87 Bulletin 87/11**

(45) Publication of the grant of the patent:
**29.03.89 Bulletin 89/13**

(84) Designated Contracting States:
**AT BE CH DE FR GB LI NL SE**

(56) References cited:
**EP-A- 0 113 444**
**DE-A- 2 905 801**
**FR-A- 2 283 355**
**FR-A- 2 525 296**

(73) Proprietor: **B.V. METAALWARENFABRIEK "VENLO",**
**L.J. Costerstraat 30, NL-5916 PS Venlo(NL)**

(72) Inventor: **Holthuisen, Arnoldus Gerardus,**
**Kerkhofweg 82, NL-5912 GR Venlo(NL)**

(74) Representative: **van der Beek, George Frans et al,**
**Nederlandsch Octrooibureau Johan de Wittlaan 15 P.O.**
**Box 29720, NL-2502 LS The Hague(NL)**

## Description

The invention relates to a sanitary single-hole tap intended for fastening in an opening in a wash-basin unit, a kitchen worktop or the like, and provided with a tap casing whose bottom edge rests sealingly in the fastened state on the top surface of the wash-basin unit, kitchen worktop, or the like, around the opening in said surface, and with at least one water supply pipe connected to the tap casing, the latter having a bore to receive a threaded bolt which can be turned from the upper side of the wash-basin unit or the like with the aid of a tool, and a nut fitting on the threaded bolt under the wash-basin unit or the like for the purpose of fastening the tap casing, said nut being so shaped that during the turning of the threaded bolt it is secured by the rigid supply pipe or pipes.

A tap of this kind, in the form of a mixer tap, is known from EP-A 0 113 444.

For the fastening of this tap, after insertion into said opening, the nut must be placed on the end of the threaded bolt from underneath the wash-basin unit or kitchen worktop or the like, and by turning the threaded bolt from the upper side the nut can be made fast against the bottom wall of the opening.

Fitting the nut from underneath is not always easy and in addition takes a great deal of time.

The invention seeks to provide a fastening which eliminates working under the wash-basin unit or kitchen worktop.

According to the invention this is achieved in that the nut is flexible, at least in part, and is so shaped that it can be passed from above through the opening when flexibly be deformed, and that the tap casing is provided on the bottom face with centering means preventing transverse displacement of the tap casing during the fastening operation.

In this way the fastening can be effected entirely from above the wash-basin unit or the like, since the nut can be fitted on the threaded bolt in advance and the bolt can be turned from the upper side.

The centering means ensure that during the fastening the tap casing cannot be displaced in the transverse direction.

The invention will be explained more fully with the aid of the drawings, in which:

Figure 1 is a side view, partly in section, of a tap casing for fastening in an opening in a wash-basin unit or the like;
Figure 2 is a view from below corresponding to Figure 1, during passage through the opening;
Figure 3 is a section of the tap casing shown in Figure 1, after it has been fastened, and
Figure 4 is a view from below corresponding to Figure 3.

That part of the tap casing which is of importance to the invention is designated 1, the connecting edge is designated 2, the centering edge 3, the supply pipes 4 and 5, the threaded bolt 6, the nut 7, the wash-basin unit or the like 8, and the opening therein 9.

As can be seen from the section shown in Figure 3, the threaded bolt 6 has a head 10, a groove with a sealing ring 11, and a groove with a retaining ring 12, for example in the form of a circlip.

The tap casing 1 is also provided in the connecting edge 2 with a groove holding a sealing ring 13.

A preferred form of construction of the nut 7 can best be seen in Figures 3 and 4.

The nut 7 consists of flexible material, for example plastics material.

The threaded bore for the bolt 6 is situated in a rigid portion 15 which also has two cavities by which the nut 7 is secured against rotation with the aid of the two supply pipes 4 and 5 (for hot and cold water in the case of a mixer tap).

Next to the rigid part 15 the nut 7 has two flexible arms 14.

The threaded bolt 6 in its final position lies offset from the centre of the opening 9. The nut 7 is thus loaded eccentrically when the bolt 6 is tightened.

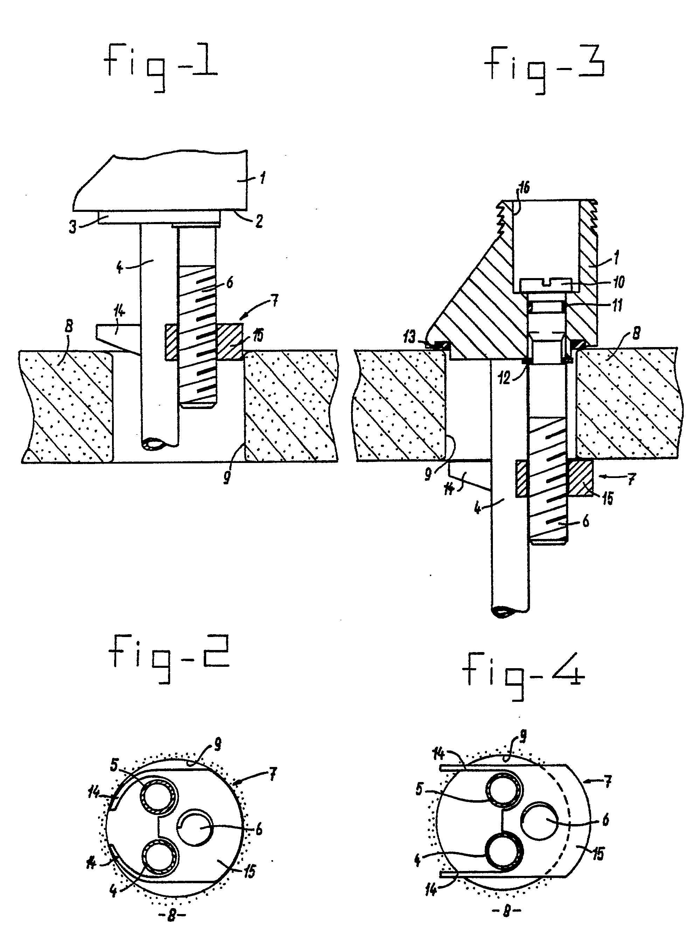

For the purpose of fastening the tap in the opening, the nut 7 is brought into the position shown in Figure 1 by turning the bolt 6, the distance between the bottom face 2 of the tap casing 1 and the surface of the nut 7 being slightly greater than the height of the opening 9. The tap casing 1 is then pressed down after it has first been moved slightly to the left in relation to the opening 9. While the casing is being pressed down, the arms 14 of the nut 7 are bent towards one another.

The nut 7 can then be passed through the opening 9 until it can open out again under the opening. The tap casing 1 is moved slightly back towards the right, so that the centering edge 3 fits into the opening 9. The nut 7 is then in the position shown in Figures 3 and 4, and the bolt 6 can be tightened.

The bolt 6 is concealed from sight because it is situated in a hole 16 in the tap casing 1, in which an outlet (not shown) is fastened. This hole thus does not have to be specially provided, as is the case in known multihole taps.

Because of the special shape of the nut 7 with a rigid portion 15 around the threaded hole, and more or less flexible arms 14, good fastening of the tap casing 1 can be achieved without it being necessary for a nut to be screwed on underneath the wash-basin unit or the like.

The arms 14 are preferably bevelled on their lower faces in order to facilitate the bending of the arms 14 while passing through the opening 9. The force to be applied by the bolt 6 to the nut 7 is not thereby reduced.

The centering edge 3 on the tap casing 1 is essential, because otherwise the nut 7 would not lie correctly against the cooperating surface, but would lie in the opening 9, if the tap casing 1 were fitted eccentrically.

## Claims

1. Sanitary single-hole tap intended for fastening in an opening in a wash-basin unit, a kitchen worktop or the like, and provided with a tap casing whose bottom edge rests sealingly in the fastened state on the top surface of the wash-basin unit, kitchen worktop or the like, around the opening in said surface, and with at least one water supply pipe connected to the tap casing, the latter having a bore to receive a threaded bolt which can be turned from the upper side of the wash-basin unit or the like with the aid of a tool, and a nut fitting on the threaded bolt under the wash-basin unit or the like for the purpose of fastening the tap casing, said nut being so shaped that during the turning of the threaded bolt it is secured by the rigid supply pipe or pipes, characterized in that the nut is flexible, at least in part, and is so shaped that it can be passed from above through the opening when flexibly be deformed, and that the tap casing is provided on the bottom face with centering means preventing transverse displacement of the tap casing during the fastening operation.

2. Sanitary single-hole tap according to Claim 1, characterized in that the nut consists of a rigid part provided approximately in the centre with a threaded hole and of two parallel flexible arms.

3. Sanitary single-hole tap according to Claim 2, characterized in that the arms are bevelled on their bottom faces.

4. Sanitary single-hole tap according to one or more of the preceding claims, characterized in that the nut is made of plastics material.

5. Sanitary single-hole tap according to one or more of the preceding claims, characterized in that after its installation the bolt is concealed from sight by the fastening of the water outlet.

**Revendications**

1. Robinet sanitaire à un seul conduit destiné à être fixé dans une ouverture d'une cuvette de lavabo, d'une paillasse de cuisine ou autre, et comportant un corps de robinet dont le bord inférieur repose de façon étanche, à l'état fixé, sur la surface supérieure de la cuvette de lavabo, de la paillasse de cuisine ou autre, autour de l'ouverture dans ladite surface, et au moins un tuyau d'alimentation en eau relié au corps du robinet, ce dernier comportant un alésage pour recevoir une tige filetée qui peut être tournée à partir du côté supérieur de la cuvette de lavabo ou autre au moyen d'un outil, et un écrou ajusté sur la tige filetée au-dessous de la cuvette de lavabo ou autre afin de fixer le corps de robinet, cet écrou étant conformé de façon que, pendant la rotation de ladite tige filetée, il soit immobilisé par le tuyau ou les tuyaux rigides d'alimentation, caractérisé en ce que l'écrou est au moins en partie souple et est conformé de façon qu'on puisse le faire passer d'au-dessus à travers l'ouverture lorsqu'il est déformé élastiquement, et en ce que le corps du robinet comporte sur la face inférieure des moyens de centrage empêchant un déplacement transversal du corps de robinet pendant l'opération de fixation.

2. Robinet sanitaire à un seul conduit suivant la revendication 1, caractérisé en ce que l'écrou consiste en une partie rigide présentant à peu près en son milieu un trou fileté, et deux bras souples parallèles.

3. Robinet sanitaire à un seul conduit suivant la revendication 2, caractérisé en ce que les bras sont biseautés sur leurs faces inférieures.

4. Robinet sanitaire à un seul conduit suivant une ou plusieurs des revendications précédentes, caractérisé en ce que l'écrou est réalisé en matière plastique.

5. Robinet sanitaire à un seul conduit suivant une ou plusieurs des revendications précédentes, caractérisé en ce qu'après son montage la vis est cachée à la vue par la fixation de l'orifice de sortie d'eau.

**Patentansprüche**

1. Einloch-Wasserhahn zur Befestigung in einer Öffnung in einer Waschbeckeneinheit, einer Küchenarbeitsplatte oder dergleichen, umfassend ein Gehäuse, dessen unterer Rand im befestigten Zustand abgedichtet auf der oberen Fläche der Waschbeckeneinheit, der Küchenarbeitsplatte oder dergleichen um die Öffnung in der genannten Fläche ruht, und mit wenigstens einem Wasserzuführrohr, das mit dem Gehäuse verbunden ist, wobei letzteres eine Bohrung aufweist, um einen Gewindebolzen aufzunehmen, der von der Unterseite der Waschbeckeneinheit oder dergleichen mit Hilfe eines Werkzeugs gedreht werden kann, und mit einer Mutter, die auf dem Gewindebolzen unter der Waschbeckeneinheit oder dergleichen zum Zwecke der Befestigung des Gehäuses sitzt, die so gestaltet ist, daß während des Drehens des Gewindebolzens sie durch das steife Zuführungsrohr oder die Rohre festgehalten ist, dadurch gekennzeichnet, daß die Mutter wenigstens teilweise flexibel ist und derart gestaltet ist, daß sie von oben durch die Öffnung geführt werden kann, wenn sie flexibel verformt wird, und daß das Gehäuse an der Unterseite mit Zentriereinrichtungen versehen ist, die eine Querverschiebung des Gehäuses während des Befestigens verhindern.

2. Einloch-Wasserhahn nach Anspruch 1, dadurch gekennzeichnet, daß die Mutter aus einem steifen Teil, das etwa in der Mitte mit einem Gewindeloch versehen ist, und aus zwei parallelen flexiblen Armen besteht.

3. Einlochwasserhahn nach Anspruch 2, dadurch gekennzeichnet, daß die Arme an ihren Unterseiten angeschrägt sind.

4. Einlochwasserhahn nach einem oder mehreren der vorhergehenden Ansprüche, dadurch gekennzeichnet, daß die Mutter aus Plastikmaterial besteht.

5. Einlochwasserhahn nach einem oder mehreren der vorhergehenden Ansprüche, dadurch gekennzeichnet, daß nach seiner Installation der Bolzen gegen Sicht durch die Befestigung des Wasserauslasses verdeckt ist.

fig-1

fig-3

fig-2

fig-4